# EUROPEAN PATENT APPLICATION

(11) **EP 4 295 721 A1**
(43) Date of publication of application: **27.12.2023**
(21) Application number: 23180808.0
(22) Date of filing: 22.06.2023
(51) Int. Cl.: A43B 13/04, C08J 11/04, C08J 11/18, C08L 7/00, C08L 19/00

(54) **COMPOUND FOR OBTAINING SOLES FOR FOOTWEAR**

(30) Priority: 22.06.2022 IT 202200013174
(71) Applicant: JV International S.r.l., 20122 Milano (IT)
(72) Inventor: MERLO, Ambrogio, 22063 Cantù (Como) (IT)
(74) Representative: Feltrinelli, Secondo Andrea

(57) **Abstract**

The present invention relates to a compound for obtaining a sole for footwear comprising a first part or support or filling part and a second part or recycled-based part, the recycled-based part constituting between 40% and 95% by weight of the compound.

## Description

### TECHNICAL FIELD OF THE INVENTION

The present invention relates to a compound for obtaining soles for footwear, as well as a sole obtained from such compound.

### STATE OF THE PRIOR ART

The soles are usually obtained starting from rubber compounds, which at the end of the sole's useful life are eliminated and not reused.

To date, the environmental issue and the issue concerning the reduction of waste in general is very relevant, but in the field of footwear it has never been addressed satisfactorily.

Moreover, high quantities of processing waste are produced during the production of the soles.

### OBJECTS OF THE INVENTION

An object of the present invention is to provide a compound for obtaining soles for footwear, as well as a sole obtained starting from this compound.

Another object of the present invention is to provide a compound as indicated above which is eco-sustainable.

Another object of the present invention is to provide a compound as indicated above which exploits the potential of components hitherto unused.

According to one aspect of the invention, a compound according to claim 1 is provided.

According to another aspect of the invention a sole according to claim 17 is provided.

The dependent claims refer to preferred and advantageous embodiments of the invention.

### BRIEF DESCRIPTION OF THE DRAWINGS

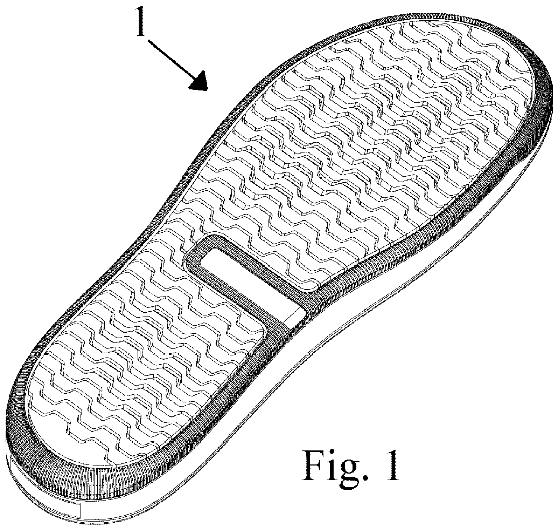

Figure 1 is a perspective view of a sole for footwear according to the present invention.

### EMBODIMENTS OF THE INVENTION

The present invention relates to a compound for obtaining a sole for footwear comprising a first part or support or filling part and a second part or recycled-based part, which recycled-based part constitutes between 40% and 95% by weight of the compound.

Preferably, the recycled-based part constitutes at least 50%, 60%, 70%, 80%, 85% or 90% by weight of the compound.

Advantageously, the recycled-based part consists of recycled material obtained from tires and/or soles for footwear and/or gaskets and/or processing waste of soles, i.e. waste of the material for obtaining soles or of a respective tread. As regards the recycled material obtained from soles for footwear, the same is preferably obtained from the bottom or tread layer of the soles.

The recycled-based part includes natural rubber constituting between 15% and 30%, for example between 19% and 24%, between 19% and 21% or between 22% and 26%, by weight of the recycled-based part and synthetic elastomers constituting between 15% and 40%, for example between 26% and 34% or between 29 and 32%, by weight of the recycled-based part.

In this case, the recycled-based part could also include:
- carbon black in percentage by weight less than or equal to 25%, for example less than or equal to 17%, if desired less than or equal to any integer value between 9 and 14 by weight of the recycled base part, if desired greater than 3 or 5% by weight of the recycled base part, and/or
- silicon dioxide between 10% and 30%, e.g. between 16 and 24% by weight of the recycled-based part, and/or
- petroleum distillates and/or extracts between 0% and 10%, for example between 0.5% and 7%, if desired between 1.3% and 6. 1% by weight of the recycled-based part, and/or
- sulfur between 0% and 5%, for example between 1% and 3%, if desired between 1.3% and 2.5% by weight of the recycled-based part, and/or
- zinc oxide between 0.5% and 5%, for example between 1% and 3% by weight of the recycled-based part.

Alternatively, the recycled-based part may include natural rubber constituting between 40% and 80% or between 40 and 77%, for example between 40% and 50%, between 55% and 60% or between 70% and 75% by weight of the recycled-based part and synthetic elastomers constituting between 0% and 25% or 0% to 23%, e.g. 3% to 23% or 5% to 23% or 5% to 10% or between 15 and 20% by weight of the recycled-based part.

In this case, the recycled-based part could also include:
- carbon black in percentage by weight between 10% and 30%, e.g. between 12% and 28% by weight of the recycled-based part, and/or
- silicon dioxide between 0.5% and 15%, for example between 1% and 10% by weight of the recycled-based part, and/or
- petroleum distillates and/or extracts between 0% and 10%, for example between 0.5% and 7%, if desired between 1.3% and 6.1% by weight of recycled-based part, and/or
- sulfur between 0% and 5%, for example between 1% and 3%, if desired between 1.3% and 2.5% by weight of the recycled-based part, and/or
- zinc oxide between 0.5% and 5%, for example between 1% and 3% by weight of the recycled-based part.

As regards the synthetic elastomers of the recycled-based part, they preferably comprise one or more elements selected from the group consisting of styrene butadiene rubber, polybutadiene rubber and/or isoprene rubber.

With regard to petroleum distillates, they may include:
- hydrotreated heavy naphthenic distillates,
- hydrotreated heavy paraffinic distillates,
- solvent-dewaxed heavy paraffinic distillates, and/or
- solvent-refined heavy paraffinic distillates.

Petroleum extracts may instead include solvent-refined heavy paraffinic distillate solvent.

As regards the support or filling part, it does not include recycled material.

Moreover, the support or filling part could include natural rubber constituting between 15% and 60%, for example between 20% and 30%, if desired between 23% and 26% by weight of the support or filling part and synthetic elastomers constituting between 20% and 40%, for example between 26% and 34% or between 29 and 32% by weight of the support or filling part.

By way of not limitative example, the natural rubber could be SVR-3L natural rubber.

As regards the synthetic elastomers of the support or filling part, they can comprise one or more elements selected from the group consisting of butadiene rubber and styrene butadiene rubber.

By way of not limitative example, synthetic elastomers could include butadiene rubber KBR01 (CAS number 9003-17-2), styrene butadiene rubber SBR1904/HS60 and/or SBR1012 and/or NS616 (CAS number 9003-55-8).

However, the support or filling part could include silica, for example precipitated silica constituting between 15% and 30% by weight of the support or filling part, for example between 20% and 28% or between 23% and 25% by weight of the support or filling part.

By way of not limitative example, the precipitated silica could be ZC-185 precipitated silica (CAS number 7631-86-9).

Other components of the compound or better of the support or filling part could be zinc stearate constituting between 0.1% and 1% by weight of the support or filling part, for example between 0.5% and 0,6% by weight of the support or filling part and/or zinc oxide constituting between 1% and 7% by weight of the support or filling part, e.g. between 2% and 3% by weight of the support or filling part.

The compound or rather the support or filling part could then include one or more resins to reinforce and improve the mechanical and physical properties of the rubber (tensile, modulus, elongation etc), if desired RT101 to improve tear resistance, one or more antioxidants and/or one or more silane agents, optionally HP-1898B (CAS number 34708-08-2).

As for antioxidants, by way of not limitative example, they could include one or more ROA antioxidants (hydrolysis resistant agent), BHT antioxidants (CAS Number 128-37-0), and/or OH3-MG.

Regarding this:
- one or more wear resistant resin(s) may constitute between 2% and 10% by weight of the support or filling part, e.g. between 4% and 6% by weight of the support or filling part,
- one or more antioxidants may constitute between 1% and 8% by weight of the support or filling part, for example between 3% and 5% by weight of the support or filling part, and
- one or more silane agents may constitute between 1% and 8% by weight of the support or filling part, for example between 3% and 5% by weight of the support or filling part.

In addition to the above described components, the compound may also include processing oil, added for the purpose of aiding the process as rubber extenders, for example P-100 oil (CAS number 64742-52-5) or others paraffinic or naphthenic oils, constituting between 0.5% and 3.5% by weight of the compound, for example between 1% and 1.5% by weight of the compound.

The compound could also include some wax, if desired in a percentage by weight between about 0.5% and 3%, if desired between 1% and 1.5% by weight of the compound.

Of course, the compound could include, in addition to the support or filling part, the recycled-based part and the oil (which constitute the so-called "masterbatch"), also components acting such as curing system or vulcanization system, for example sulfur and/or accelerators in a percentage by weight of the compound between 0.1 and 5%.

If desired, the sulfur could constitute a percentage by weight of the compound between 0.1% and 0.5%, for example between 0.2% and 0.3%, whereas the accelerators could constitute a percentage by weight of the compound between 0. 1% and 0.3%, for example between 0.15% and 0.25%.

By way of not limitative example, the sulfur could be sulfur IS-80, while the accelerators could be DM-80 (CAS number 120-78-5), TBZTD-75GE (CAS number 10591-82-2) or CBS- 80.

A vulcanized compound according to the present invention can have the following physical properties:
Hardness: ASTM D2240 Shore A - between 50 and 85
Tensile strength: ASTM D412 - KG/CM2 between 140 and 180
Abrasion resistance: ASTM D5963 - MM3 - between 40 and 250 max
Elongation (%) between 300 and 800 %
T-tear (tear strength) ASTM D624 (kg/cm) between 15 and 50

As regards the process for obtaining a compound according to the present invention, first the components of the support or filling part and of the recycled-based part are added and mixed, if desired also with the processing oil and subsequently, after any intermediate steps, other components, such as sulfur and accelerators, are added to the thus obtained intermediate mixture.

Of course, such a process comprises standard steps, such as one or more mixing, cooling, heating, ripening and so on steps.

Subject-matter of the present invention is also a sole 1 for footwear obtained by molding a compound as indicated above.

In this regard, once the components of the "curing system" have been added to the masterbatch (previously obtained by mixing or adding the support or filling part, the recycled-based part and oil) the sole will take its final shape in a mould, for example subjected to a specific pressure (e.g. 130 - 150kg/cm2) and temperature (160 - 165 °C).

Subject-matter of the present invention is also a footwear provided with a sole as aforesaid.

If desired, the footwear comprises a portion of upper or an upper constrained or connected to the sole or in one piece with the latter.

As it will be understood, a sole according to the present invention, comprising a high percentage of recycled parts, has a high degree of eco-sustainability.

Modifications and variations of the invention are possible within the scope defined by the claims.

## Claims

1. Compound for obtaining a sole for footwear comprising a first part or support or filling part and a second part or recycled-based part, said recycled-based part constituting between 40% and 95% by weight of the compound.

2. Compound according to claim 1, wherein said recycled-based part constitutes at least 50%, 60%, 70%, 80%, 85% or 90% by weight of the compound.

3. Compound according to claim 1 or 2, wherein said recycled-based part consists of recycled material obtained from tires and/or soles for footwear and/or gaskets and/or processing waste from soles for footwear.

4. Compound according to any one of the preceding claims, wherein said recycled-based part includes natural rubber constituting between 15% and 30% by weight of the recycled-based part and synthetic elastomers constituting between 15% and 40% by weight of the recycled-based part.

5. Compound according to claim 4, wherein said recycled-based part comprises carbon black in percentage by weight less than or equal to 25% and higher than 5% by weight of the recycled-based part.

6. Compound according to claim 4 or 5, wherein said recycled-based part comprises silicon dioxide between 10% and 30% by weight of the recycled-based part.

7. Compound according to any one of claims 1 to 3, wherein said recycled-based part includes natural rubber constituting between 40% and 80% by weight of the recycled-based part and synthetic elastomers constituting between 0% and 25% by weight of the recycled-based part.

8. Compound according to claim 7, wherein said recycled-based part comprises carbon black in a percentage by weight between 10% and 30% by weight of the recycled-based part.

9. Compound according to claim 7 or 8, wherein said recycled-based part comprises silicon dioxide between 0.5% and 15% by weight of the recycled-based part.

10. Compound according to any one of claims 4 to 9, wherein said recycled-based part comprises distillates and/or petroleum extracts between 0.5% and 7% by weight of the recycled-based part.

11. Compound according to any one of the preceding claims when dependent on claim 4 or 7, wherein said synthetic elastomers of said recycled-based part comprise one or more elements selected from the group consisting of styrene butadiene rubber, polybutadiene rubber and/or isoprene rubber.

12. Compound according to any one of the preceding claims, wherein said support or filling part includes natural rubber constituting between 15% and 60% by weight of the support or filling part and synthetic elastomers constituting between 20% and 40% by weight of the support or filling part.

13. Compound according to claim 12, wherein said synthetic elastomers of said support or filling part comprise one or more elements selected from the group consisting of butadiene rubber and styrene butadiene rubber.

14. Compound according to claim 12 or 13, wherein said support or filling part includes precipitated silica constituting between 15% and 30% by weight of the support or filling part.

15. Compound according to claim 12 or 13 or 14, wherein said support or filling part comprises a polyethylene glycol activator constituting between 1% and 5% by weight of the support or filling part.

16. Compound according to any one of the preceding claims, comprising processing oil constituting between 0.5% and 3.5% by weight of the compound.

17. Sole for footwear obtained by molding a compound according to any one of the preceding claims.

18. Sole according to claim 17, having the following physical properties:
Hardness: ASTM D2240 Shore A between 50 and 85
Tensile strength: ASTM D412 - KG / CM2 - among 140 and 180
Abrasion resistance: ASTM D5963 - MM3 - among 40 and 250 max

19. Footwear provided with a sole according to claim 17 or 18.
